# EUROPEAN PATENT SPECIFICATION

(11) **EP 1 010 299 B1**
(45) Date of publication and mention of the grant of the patent: **05.07.2006**
(21) Application number: 98941437.0
(22) Date of filing: 26.08.1998
(51) Int. Cl.: H04L 12/40, H04Q 7/30, H04Q 11/04, H04J 3/16, H04B 7/26, H04L 12/56

(54) **COMMON ARCHITECTURE FOR A CROSS-CONNECTING PROCESSOR**
GEMEINSCHAFTLICHE ARCHITEKTUR FÜR EINEN QUERVERBINDUNGSPROZESSOR
ARCHITECTURE COMMUNE POUR PROCESSEUR D'INTERCONNEXION

(30) Priority: 26.08.1997 FI 973507
(43) Date of publication of application: 21.06.2000
(73) Proprietor: Nokia Corporation, 02150 Espoo (FI)
(72) Inventor: YLÄ-MELLA, Jarmo, FIN-01600 Vantaa (FI); METSÄLÄ, Esa, FIN-02200 Espoo (FI)
(74) Representative: Brax, Matti Juhani
(86) International application number: PCT/FI1998/000660
(87) International publication number: WO 1999/011027

(56) References cited:
- EP-A1- 0 622 919
- EP-A2- 0 150 940
- WO-A1-93/22859
- WO-A1-94/15298
- WO-A1-94/28644
- US-A- 4 862 480
- US-A- 5 696 788

## Description

The invention relates in general to cross-connects which have interfaces to an external communications system, said interfaces being controlled by a cross-connecting processor. In particular the invention relates to the coding of instructions that control the operation of a cross-connecting processor.

Fig. 1a shows a base station network in a cellular radio system, comprising a base station controller 100 (BSC) and a plurality of base transceiver stations 101 (BTS). The base station controller 100 is further connected to a mobile switching center, which is not shown. To enable transmission of data between them, the base station controller 100 and base transceiver stations 101 are interlinked through a plurality of connections which constitute a so-called transmission system in the base station network. The standards for a cellular radio system such as the Global System for Mobile Telecommunications (GSM), for example, usually do not specify the transmission method to be used in the base station network, except for defining the functions that the transmission method has to be capable to realize. In GSM, the interface between two base transceiver stations or a base transceiver station and the base station controller, as defined in the standards, is called the Abis interface. The transmission method may comprise e.g. a 2-Mbit/s or 1.5-Mbit/s PCM connection (Pulse Coded Modulation; ITU-T G.703 and G.704), SDH connection (Synchronous Digital Hierarchy; ITU-T G.774.03), ATM connection (Asynchronous Transfer Mode; ETS 300 371), ISDN connection (Integrated Services Digital Network), or a HDSL connection (High Density Digital Subscriber Line). The physical connection may comprise an ordinary copper wire, optical cable or a microwave radio link.

In the base transceiver stations and base station controller of the system depicted in Fig. 1a connection to the transmission system is realized through a cross-connect 102. A cross-connect 102 in a base transceiver station may comprise one or more transmission units (TRU). Cross-connecting means that the incoming data, which are arranged in frames, can be connected to the outgoing direction in the cross-connecting device such that the location of the data bits in the frames can be altered. The base transceiver station cross-connect "drops" certain bits and time slots in the transmission system frame to the base transceiver station, i.e. directs data concerning that particular base transceiver station, which arrive in certain time slots, to the base transceiver station and, on the other hand, associates the data leaving the base transceiver station in the direction of the base station controller with certain time slots allocated to that base transceiver station. The cross-connect may also perform summing, multiplication or other operations on the incoming data before the data are connected to the outgoing direction. When the cross-connect is placed either in the same equipment rack with the base transceiver station or in its immediate vicinity, the base transceiver station constitutes a compact unit and the base station network can be easily modified and expanded.

The transmission capacity allocated to one base transceiver station depends on how many TRX (Transmit/Receive) units 103 it contains. The TRXs constitute a radio interface to terminal equipment 104, and the number of TRX units determines how many simultaneous speech or data connections the base transceiver station can handle. Different parts of the base station network may also require different amounts of transmission capacity depending on the base station network topology. In a tree-like base station network the highest capacity is required of connections near to the base station controller.

At its simplest a transmission system comprises a so-called point-to-point connection where a given GSM base transceiver station communicates directly with the base station controller and through the latter with a switching center. However, in the case of a 2-Mbit/s PCM, for example, the traffic capacity required by a base transceiver station having one TRX is quite small compared to the whole transmission band. Typically, two and a half time slots in a PCM frame (6 to 8 voice channels and signalling), or 160 kbit/s, are reserved for one TRX. Therefore, a point-to-point connection often wastes capacity and becomes expensive. On the other hand, the use of existing ISDN connections for point-to-point connections may be an alluring idea. Network duplication can be realized using redundant point-to-point connections.

The transmission band can be utilized more efficiently by chaining base transceiver stations (so-called multidrop chain structure). In the chain, several base transceiver stations share, on a time division basis, the same transmission medium, thus better utilizing the connection capacity. Thus the integrated cross-connecting function in the base transceiver station really becomes useful as the time slot arrangements can be made within the base transceiver station.

Loop networks are used for network duplication. Base transceiver stations are looped together so that there exists at all times a transmission connection in both directions of the loop from each base transceiver station to the BSC. Normally, one of the connections is active. Network monitoring is realized using status bits, or so-called pilot bits, which each base transceiver station sends in both transmission directions in the loop. A change in the state of a pilot bit indicates a network fault, at which point cross-connects in base transceiver stations switch over to the back-up connection. Network synchronization data are also sent using status bits of their own. A switch-over as quick as possible enables network operation without disconnected calls even in fault situations. A GSM call can tolerate a 500-ms break in the transmission connection without disconnecting the call proper.

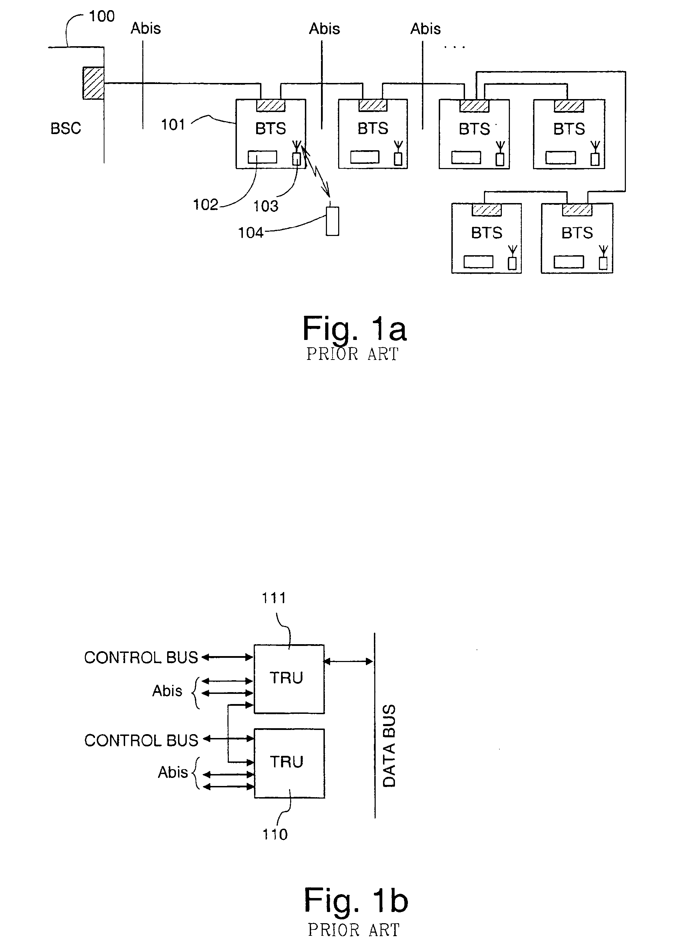

Fig. 1b shows a prior-art cross-connect in a GSM base transceiver station. It has two separate transmission units 110 and 111. Both transmission units have an "outbound" Abis interface according to the GSM standards, i.e. an interface to either the base station controller or another base transceiver station (not shown). In addition, both transmission units have an administrative connection to the base station controller. One of the transmission units is also connected to the internal data bus in the base transceiver station which is used in sending the downlink data associated with the voice and signalling connections handled by the base transceiver station to the TRX units (not shown) of the base transceiver station, and, correspondingly, the uplink data from the TRX units to the base station controller. In the prior-art implementation the transmission units 110 and 111 in the cross-connect are wholly separate and they both have internal cross-connecting buses of their own. The transmission units are interconnected through the Abis interface as shown in Fig. 1b.

In future cellular radio systems the average cell size will be smaller and, hence, the number of cells greater than today so that transmission systems shall be capable of handling more base transceiver stations, and network topologies and cross-connections will be more complex than now. The operator providing the transmission medium will not necessarily be the same as the operator running the cellular radio system, so the latter must be able to realize transmission between base transceiver stations and base station controllers as advantageously and efficiently as possible, using the various transmission possibilities available.

A prior art publication WO-A1-9428644 discloses certain common features of previously known cross-connecting units of base transceiver stations.

An object of this invention is to provide a new kind of cross-connect transmission unit which is small in size, versatile and flexible from the point of view of functional programming.

A method according to the invention for handling instructions in a cross-connecting device is characterized by the features recited in the characterizing part of the independent claim directed to a method.

A base station according to the invention for a cellular radio system is characterized by the features recited in the characterizing part of the independent claim directed to a base station.

An instruction architecture can be applied to control a cross-connecting processor arranged so as to read instructions according to the instruction architecture from a control memory and, controlled by said instructions, connect data stored in a data memory to certain transmitter interfaces. The instruction architecture has the following features:
- each instruction comprises at least a first part indicating the type of the instruction and a second part specifying the source of the data to be connected,
- each instruction comprises at least one and at most M instruction words, where M is the number of bits in the greatest possible data unit that can be connected at once, and
- the space reserved in the control memory by each individual instruction is N times the size of the instruction word, where N is the number of bits in the data source the connection of which is controlled by the instruction in question.

In the inventional structural solution the cross-connection and the functions required by the transmission connections are implemented modularly by decentralizing them into several parts which in this patent application are called transmission units. Decentralization is to be understood such that a single transmission unit can establish all transmission connections of a base transceiver station but units can be added according to capacity requirements so that they function as a whole. The cross-connection is shared by the transmission units through a parallel bus in the so-called motherboard, which bus interconnects the transmission units and is advantageously duplicated for reliability. From the point of view of base station control the transmission units constitute one manageable whole. Each transmission unit realizes a certain type of standard transmission interface.

As the amount of GSM trafnc increases there also emerges a need to have different transmission interfaces in one and the same base transceiver station. Therefore, the new base station solution can use transmission units of many different types. Within a transmission unit, a given first part realizes the transmission interface and converts the received data, which are to be cross-connected, from the format used in the transmission system to the internal format used in the cross-connect. The data are written in that format to the cross-connecting bus interconnecting the transmission units. The other parts of the transmission unit realize advantageously at least cross-connection, unit control, synchronization with other transmission units and interfaces to the base station motherboard. A transmission unit may comprise one or more printed circuit boards. Hereinafter, the term "special part" refers to parts realizing a transmission interface and the term "common part" refers to the cross-connecting and bus interface block. In addition to the functions mentioned above, a transmission unit may include other functional blocks, too.

The special part in the transmission unit adapts the cross-connect in the base transceiver station to the base station network's transmission system, which may be a PCM, HDSL or an ISDN system, for example. Advantageously the special part may also comprise adapter circuits for different physical transmission media such as copper wire, optical cable or radio link.

An essential component in the common part of a transmission unit is the cross-connecting processor which reads cross-connection data from the cross-connecting bus linking the transmission units and directs said data in a certain order to transmitter interfaces linking the common part and special part, wherefrom the data are further taken to the transmission system. To control the operation of the cross-connecting processor the common part includes a control memory which contains instructions comprised of fixed-length instruction words. The cross-connecting processor reads one instruction word at a time from the control memory and performs certain read, write and other operations in accordance with the instruction comprised of the instruction words. In the cross-connect according to the invention the instructions conform to an architecture where the smallest entity to which an instruction may be directed is one bit. A first part of the first instruction word specifies the type of the instruction. A second part of the instruction indicates the location of the data in the frame structure of the cross-connecting bus with the accuracy of one block. Block numbers that do not have counterparts in the real frame structure can be used to specify special connections. Depending on the number of bits to be connected at once, the other parts of the instruction may indicate, in hierarchic order, the block, time slot and bit. If an instruction is directed to a data amount greater than one bit in the frame structure, the instruction words following immediately the first instruction word can be used for a more accurate specification of the connection of the data amount in question.

The invention will now be described in more detail with reference to the preferred embodiments presented by way of example and to the accompanying drawings wherein
- Fig. 1a: shows a known base station network,
- Fig. 1b: shows a known cross-connect in a base station,
- Fig. 2: shows a cross-connect in which the invention can be applied,
- Fig. 3: shows in more detail part of Fig. 2,
- Fig. 4: shows in more detail another part of Fig. 2,
- Fig. 5: shows the arrangement of instruction words in the control memory,
- Fig. 6: shows the structure of control memory addresses, and
- Figs. 7-14: show instructions according to the instruction architecture according to the invention.

Like elements in the drawings are denoted by like reference designators.

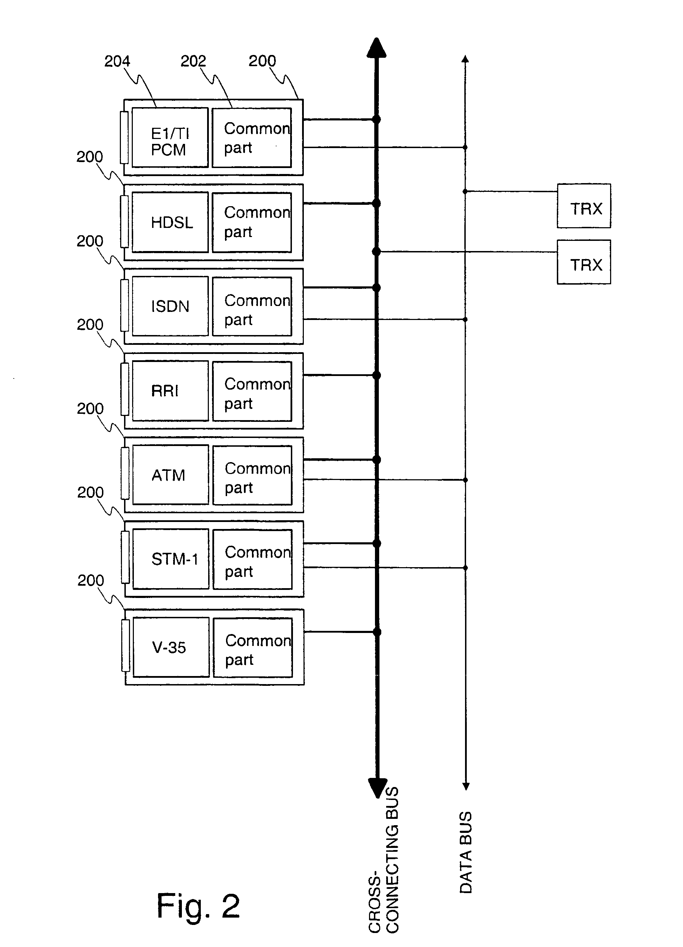

Fig. 2 shows an example of the new structure for the cross-connect in a base transceiver station. The cross-connect comprises at least one transmission unit 200. It may also have more transmission units depending on the desired quality and quantity of the transmission connections. Each transmission unit 200 comprises a common part 202 and special part 204. In a preferred embodiment each transmission unit is realized on a circuit board containing the necessary physical interfaces and functional blocks required by the common part 202 and special part 204. The transmission units are electrically coupled to the internal doubled cross-connecting bus of the base transceiver station. The transmission units may also be coupled to the data bus used by the transmitter/receiver units, or TRXs, of the base transceiver station. In a typical embodiment, where the TRX units of the base transceiver station are connected to the data bus, at least one transmission unit has to be coupled to the data bus to enable data communications between the TRX units and transmission connections outside the base transceiver station via the transmission units. In other embodiments of the invention the TRX units may also be coupled to the cross-connecting bus.

In addition to the cross-connecting bus and data bus shown in Fig. 2 the base transceiver station may also include other buses for controlling and synchronizing the operation of the transmission units. In such an embodiment the transmission units are coupled to those buses, too.

The special part 204 in each transmission unit 200 has at least one bi-directional external transmission connection 206 which may be e.g. a PCM, SDH, ATM, ISDN, HDSL or some other connection. The special part, which is of RRI (Radio Relay Interface) type, is advantageously directly connected to the outside unit of the microwave radio in the base transceiver station. In one cross-connect the external transmission connections in the special parts of the transmission units may all be identical or they may be different. In addition, a transmission unit may have interfaces for two or more types of transmission connections. Data traffic between the special part 204 and common part 202 is preferably substantially similar in all transmission units independent of the type of the external transmission connection. An advantageous solution is to provide N standard-capacity (say, 2.048 Mbit/s) connections between the special part and common part, where N is chosen such that the transmission capacity between the special part and common part at least equals the combined capacities of the transmission connections coupled to the special part.

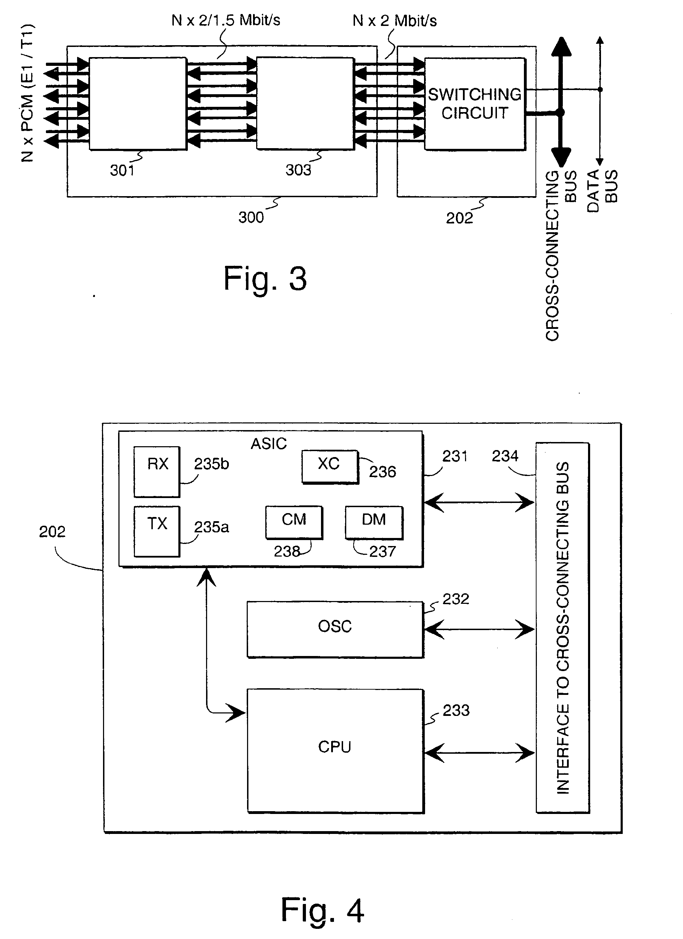

Fig. 3 shows in more detail a special part 300 of a transmission unit in a cross-connect according to the invention, which special part is intended for the transmission and reception of a PCM signal. It has an N-channel line interface circuit 301 which, when receiving, is adapted to the received signal level and extracts and regenerates timing information from the data. Depending on the application, the line impedance may be 75 ohms, 120 ohms (El) or 100 ohms (T1). When transmitting, the line interface circuit 301 adapts the data to the transmission medium, which is a coaxial cable or twisted-wire pair. The transmission line is logically terminated by an N-channel framer circuit 303. When receiving, it decodes the line coding (e.g. high density bipolar 3, HDB3; alternate mark inversion, AMI; or binary 8 zero substitution, B8ZS) and becomes locked to the frame phase by means of frame alignment words in the data stream. In addition, the framer circuit 303 includes other functions e.g. for processing overhead data; decoding the channel signalling, handling of T1 HDLC messages, processing various alarm information, etc. Finally, the special part delivers the data stream to the common part in a form in which the clock signal is separate from the data and the start of a frame is indicated using a signal of its own. In the outgoing direction the steps mentioned above are carried out in the reverse order.

Regardless of whether the transmission interface capacity is 2.048 Mbit/s (E1) or 1.554 Mbit/s (T1). the framer circuit 303 always provides an N x 2.048 Mbit/s interface to the common part. This is achieved by internal data buffering inside the framer circuit 303 and by placing the data in the E1 frame structure in connections between the framer circuit 303 and common part 202, so that if the lower-capacity T1 frame structure is used in the transmission, the "extra" time slots in the E1 frame structure are filled with pseudo-data. The same principle holds with other applications of the special part; the interface to the common part is always N x 2.048 Mbit/s.

Fig. 4 shows in simplified form the basic electrical structure of a transmission unit's common part 202. The common part comprises a cross-connecting circuit 231. which usually is an application specific integrated circuit (ASIC) and which hereinafter will be called a switching circuit. In addition, the common part comprises an oscillator 232, microprocessor 233 and a cross-connecting bus interface 234. Transmitter and receiver blocks 235a and 235b for communications with the special part are located in the switching circuit 231 which further comprises, among other things, a cross-connecting processor 236, data memory (DM) 237 and control memory (CM) 238. The data memory 237 serves as an intermediate data store where the outgoing data, i.e. data flowing from the cross-connecting bus to transmitter blocks via the switching circuit, are temporarily stored for rearrangement. The microprocessor 233 controls the operation of the entire common part.

Through the cross-connecting bus interface 234 the common part is connected to the cross-connect's cross-connecting bus whose data structure conforms to a certain bus protocol. Data on the cross-connecting bus are arranged in frames having a certain regular form. Each frame on the cross-connecting bus is stored in its turn to the data memory DM of the cross-connecting circuit 231. A cross-connecting processor XC reads data from the data memory DM e.g. one byte at a time and writes those data to transmitter blocks 235a which lead to the special part of the transmission unit. A term called granularity defines the smallest amount of data that can be independently managed in a write operation. If the granularity is one bit, it means that each bit read from the data memory DM and written to transmitter blocks 235a can be controlled independent of other bits. Instruction words read from the control memory CM determine the order in which the data read from the data memory DM are written to transmitter blocks 235a.

A GSM call according to the prior art requires a 16-kbit/s capacity in the transmission system, corresponding to two bits in a PCM transmission system frame (according to G.703 and G.704 standards, PCM frames are repeated 8000 times a second in the transmission system so that one bit per frame corresponds to a capacity of 8 kbit/s). However, in the cross-connect according to the invention it is advantageous to prepare for the so-called half-rate GSM connections, each of which represents a transmission capacity of just 8 kbit/s. Since cross-connects have to be able to handle these connections independent of each other and, furthermore, since it is advantageous to prepare for the channel associated signalling (CAS) according to standards G.703 and G.704 in cross-connects, the granularity has to be one bit.

The data in the data memory DM come from the cross-connecting bus which uses a certain frame structure. According to a preferred embodiment the cross-connecting bus frame comprises 56 blocks. Each block comprises 32 to 36 time slots and each time slot comprises eight bits. To avoid overlapping read and write operations the data memory comprises two identical one-frame halves so that the cross-connecting processor reads data from a frame stored in one half while at the same time the next frame from the cross-connecting bus is being written to the other half.

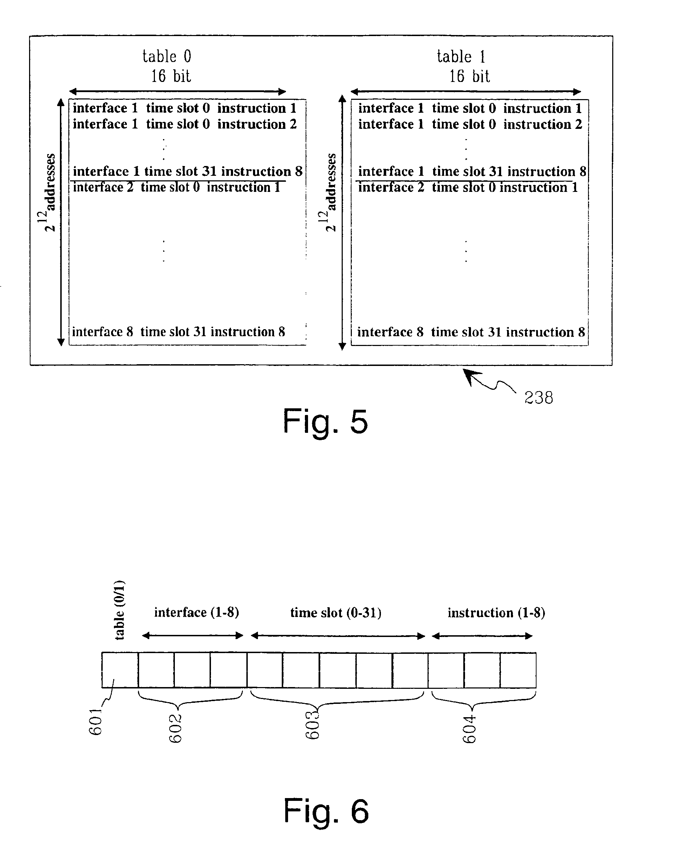

Fig. 5 shows an advantageous way of arranging instruction words in the control memory 238. The purpose of the control memory is to hold the necessary control information, i.e. instructions comprised of one or more instruction words, which is needed for making the connection in the outgoing direction. The switching circuit control memory is preferably comprised of 16-bit-wide static RAM and has two switching tables (table 0 and table 1) per each of the circuit's eight 2-Mbit/s transmitter interfaces. Each table contains so much space that, if necessary, an individual connection can be specified for each bit in the E1 frame formed by the transmitter interface, i.e. 256 control words per table. If the switching circuit has, say, eight transmitter interfaces, the total size of the memory needed is 8 interfaces x 2 tables per interface x 256 instruction words per table x 16 bits per word = 65,536 bits.

The basic case is that each bit to be connected is defined separately, i.e. by an instruction of its own, comprising one instruction word. It is, however, possible to make e.g. 32-kbit/s or 64-kbit/s connections, or definitions in which half a byte or a whole byte is connected by one instruction. In that case it is possible that all eight instruction words reserved for one time slot are not needed, but some of them are ignored. The "extra" instruction words may be used for various additional specifications for the connection, so that one instruction may comprise several instruction words.

The instructions specify certain switching types, which can be called the B, Y and C type. The B type means that a certain source (byte or portion of byte stored from the cross-connecting bus to the data memory) is connected directly through a transmitter interface to a certain location in the outbound frame. Type Y can be used to specify conditional switching, which means that a certain outbound information element (bit, portion of byte or byte) can be connected from two alternative sources. Y-type switching is used e.g. at a base station in a loop network, where fundamentally the same information comes to the base station from two different directions. The cross-connect in the base station chooses one of the data sources to be transmitted further (or to be forwarded to the TRX unit in the base station). Data sources are changed when a certain condition is met. C-type switching is used for carrying out digital summing of certain channels.

Fig. 6 shows the structure of control memory addresses. The control memory addresses are advantageously coded in the storage space as follows. The most significant bit 601 indicates the table, the next three bits 602 indicate the interface affected by the connection, the next five bits 603 indicate the time slot of said interface, and the three least significant bits 604 specify the eight instruction words reserved for the time slot. If each bit in the byte to be connected is defined by an instruction of its own, comprising one instruction word, the three least significant bits 604 in the instruction word address directly indicate the bit (0 to 7) in the time slot that is affected by the instruction. However, in the case of a 16-kbit/s, 32-kbit/s or 64-kbit/s connection, the three lowest address bits may also indicate something else since in the 32-kbit/s connection, for example, it is not necessary to control the handling of the eight bits in the time slot separately with instructions of their own but, instead, instructions are directed to time slot halves (four bits at a time). So, the control memory address coding takes 12 address bits in all.

By dividing the control memory into two tables a certain advantage is gained in situations where it is desired to change the cross-connection. Adding, removing or changing a connection requires a change in the instructions in the control memory. However, the simultaneous reading and writing of an instruction word would cause an uncontrollable situation. In a two-table system the microprocessor or another device controlling the operation of the cross-connect can make changes in one table (the "passive" table) while the cross-connecting processor is at the same time reading the other table (the "active" table). After the changes have been made, the cross-connecting processor is instructed to switch over and start reading from the other table. Furthermore, as the addresses of corresponding instruction words differ only by one bit, the switch-over to the other table can be performed very smoothly.

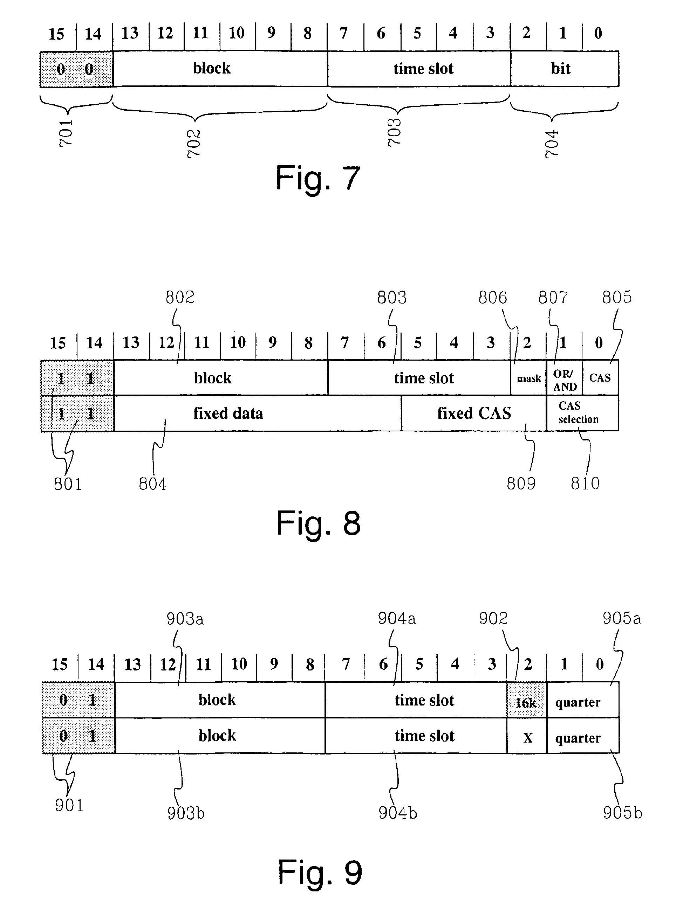

So, the control memory contains instructions needed for making the connections. All connections supported by the circuit can be realized by said instructions. Below it will be described, instruction by instruction, all different connection types supported, and their variations. A bit, byte or portion of byte to be connected can be called a data unit in general. In Figs. 7 to 14, the closed rectangles represent the instruction words and their parts, and numbers 0 to 15 above them indicate the bit numbers in an instruction word. Bit 15 is the most significant bit and bit 0 is the least significant bit in an instruction word.

The two highest bits 701 in the instruction shown in Fig. 7, which instruction comprises one instruction word, indicate a B8-type instruction. This is encoded in Fig. 7 as bit combination '00'; this coding is exemplary only, the instruction type identifiers can be freely chosen by the applier of the invention. The next six bits 702 indicate the block (0-53) in the cross-connecting bus from which the connection is to be made, the next five bits 703 indicate the time slot (0-31), and the last three bits 704 indicate the bit (1-8) in the time slot. A few special types can be specified using block numbers that have no counterparts in the cross-connecting bus frame structure. If the block number is e.g. 63, the cross-connecting processor will not connect the bit read from the data memory to the current bit in the current interface and time slot but, instead, the least significant bit in the instruction word. Such a method can be used for connecting fixed data e.g. for various signalling uses: the least significant bit in the instruction word is "fixed" because it does not depend on the data read from the cross-connecting bus.

If the block number is e.g. 62, the data are not connected from the data memory (i.e. from the cross-connecting bus) but from another memory location available to the switching circuit, say, from a so-called service channel adder. If the block number is 61, the transmitter interface corresponding to the instruction word address is set to the so-called high-impedance state for the duration of the bit in question. This feature is possibly useful in an application where two single-common-part switching circuits, or other data processing circuits, feed a common framer circuit in the special part. Three-state outputs are described in more detail in the Finnish patent application "Three-state output of part of cross-connect" filed at the same time with this patent application by the same applicant and later published as FI973505. Block numbers 54 to 60 can be reserved for future extensions of the instruction architecture.

Fig. 8 shows a so-called B64-type instruction, which indicates the connection of a whole time slot, or eight bits, at a time. This switching type always reserves eight consecutive instruction words in the control memory. Of these, the first two are read and decoded into a 64-kbit/s instruction as shown in Fig. 8. The remaining six instruction words are ignored. In other words, after the reading of the two instruction words shown in Fig. 8, nothing is done for six instruction cycles but the control memory is read only when the next time slot is to be connected.

The B64-type instruction according to Fig. 8 can be used e.g. to connect the time slots that are associated with the aforementioned CAS signaling as the cross-connection of CAS is sensible only with 64-kbit/s channels. The B64 switching can be used with pure data, too. It always connects a whole time slot once, and there is no need to define each bit separately as with the B8. Similar to the B8, the two most significant bits 801 indicate the instruction type (here, '11). Fields 802 and 803, which represent the data source, are in the first instruction word of the instruction coded in the same way as in B8. The field containing the three least significant bits needs not be used to indicate the bit as the instruction indicates the connection of the whole time slot. By using an "extra" block number in field 802 it is possible to specify a special case in the same way that was described above for instruction type B8. For example, if the block number is 63, a fixed bit pattern 804 from another instruction word is connected to the transmitter interface instead of the time slot read from the data memory. Block number 62 will set the data and CAS lines of the transmitter interface in question to the high-impedance state for the duration of the whole time slot.

The least significant bit 805 in the first instruction word indicates whether the CAS corresponding to the channel is connected or not. If the CAS is not connected, a signal comprised of '1' is sent out from the circuit instead of the CAS. Bits 806 and 807 can be used to define a masking operation for the outbound data with the fixed data field 804 of the second instruction word. The alternatives are "no masking" (bit 806 '0), AND mask (bit 806 '1' and bit 807 '0') and OR mask (bit 806 '1' and bit 807 '1'). If the CAS is connected, the CAS word to be connected can be replaced by a fixed bit pattern in field 809 of the second instruction word, or a masking operation can be performed between this field and the CAS signal read from the memory. These latter options are selected by the two least significant bits 810 in the second instruction word.

Instruction type C16 depicted in Fig. 9 always comprises two consecutive instruction words. The first two bits 901 in the instruction words indicate with bit pattern '01' a C-type switching, i.e. digital summing. Bit 902 in the first instruction word indicates whether or not the granularity is 16 kbit/s, i.e. whether the instruction type is C16 or C32/C64 (discussed later on). The rest of the fields 903a and 903b, 904a and 904b, 905a and 905b indicate the block number and time slot and time slot quarter of the two blocks to be summed. Thus, type C16 can specify a summing function at two-bit level, but only for two sources. If more sources are needed, one has to use C32 or C64 instructions. Then, however, the granularity becomes poorer.

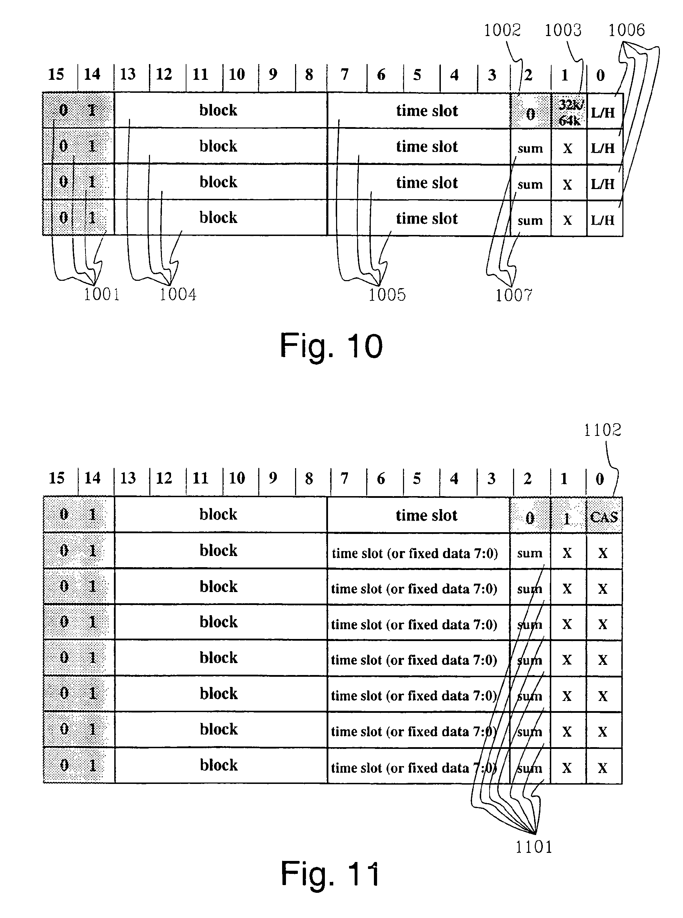

The C32-type instruction shown in Fig. 10 realizes the same summing function as C16, but there may be at most four sources read from the data memory. If the two most significant bits 1001 in the first instruction word indicate type C (here, '01) and bit 2 1002 in the first instruction word indicates that the granularity is not 16 kbit/s (cf. bit 902 in Fig. 9), bit 1 1003 in the first instruction word indicates whether it is C32 or C64. As type C32 uses four instruction words, the summing can only be done with time slot halves, i.e. at the 32-kbit/s level. In each of the instruction words, field 1004 indicates the block, field 1005 indicates the time slot and the one-bit field 1006 indicates the time slot half (higher or lower). If there are less than four sources to be summed, the third least significant bit 1007 can be used to indicate in the second or third instruction word that summing stops after the source indicated by the instruction word in question. As a special type, any instruction word may specify block 63 as the source so that fixed data located in certain time-slot-indicating bits of the instruction word in question (e.g. from the eighth least significant bit to the fourth least significant bit, bits 7 to 3) are summed with the other sources. This feature can be used to realize masking for the summing operation.

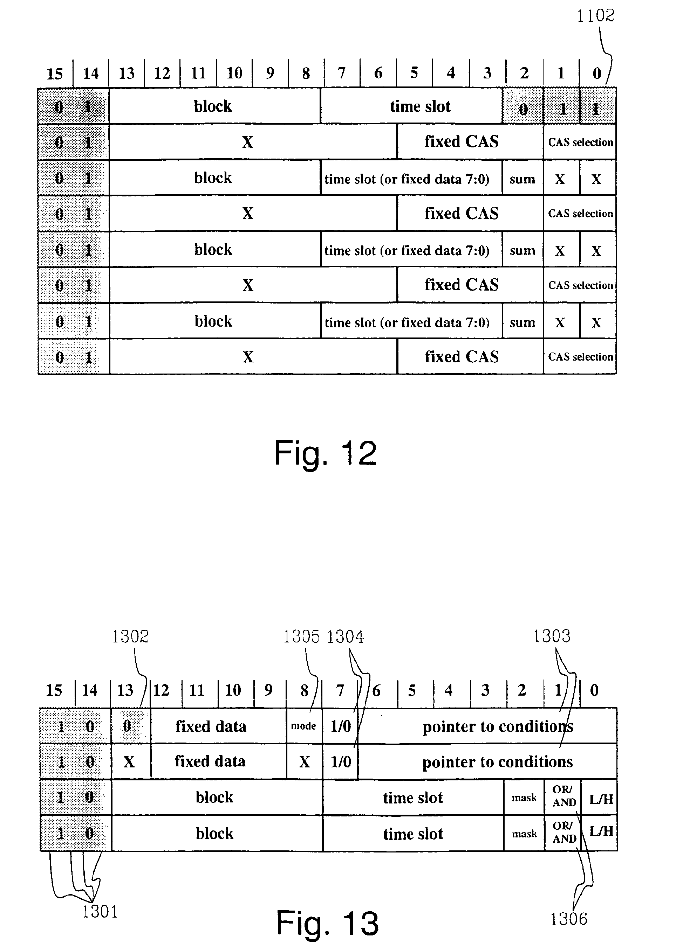

The C64 instruction type shown in Fig. 11 can be used to carry out summing at the time slot level, 64-kbit/s level. There may be at most eight sources to be summed, and the third least significant bit (bit 2) 1101 in the instruction word indicates the end of summing just like bit 1007 in Fig. 10. One of the sources to be summed may be fixed data, in which case the instruction word corresponding to the fixed data specifies block 63, and the fixed data are taken from bits 7 to 0. The fixed source always has to be the last source because summing is stopped upon this condition. This implementation is because there is not left in the 16-bit instruction any separate free bit to indicate the end of summing in the case of fixed data. The least significant bit (bit 0) 1102 in the first instruction word indicates whether or not the CAS channels are summed; Fig. 12 depicts the case where the CAS channels are included in the summing.

If the least significant bit 1102 in the first instruction word, indicating the cross-connection of CAS, is set as in Fig. 12, the CAS channels corresponding to the specified channels are summed, too. As the data RAM can be read only eight times per time slot, the cross-connecting of CAS limits the sources to be summed down to four. The masking of CAS etc. are coded in the same ways as in a B64-type instruction (cf. Fig. 8). Figs. 11 and 12 show that there are two quite differently coded variants of the C64 type according to whether the CAS is summed or not.

The Y32-type instruction shown in Fig. 13 is used to specify conditional switching. The coding '10' of the most significant bits (bits 15 and 14) 1301 indicates type Y, and the next bit (bit 13) 1302 in the first instruction word indicates whether the switching level is 32 kbit/s or 64 kbit/s. The seven least significant bits 1303 (bits 6 to 0) in the first two instruction words indicate two pointers to so-called condition status registers which are described in more detail in the Finnish patent application "Automatic conditional cross-connection" filed at the same time with this patent application by the same applicant and later published as FI 973506. The condition status registers contain one-bit status information for 128 conditions in all. Bit 7 1304 in the first two instruction words indicates whether the status in the condition status register at a location indicated by the pointer is interpreted as true in the '0' state or in the '1' state. Bit 8 1305 in the first instruction word indicates the condition monitoring method. If the bit 1305 is in the logical '0' state, only the first pointer is examined and depending on whether the status indicated by the pointer is true or false, the time slot half specified in either the third (true) or fourth (false) instruction word is connected.

If bit 8 in the first instruction word specifies monitoring for two conditions, data are connected from the circuit as follows. If just one of the conditions is true, the corresponding data are connected from the circuit (the pointer in the first instruction word corresponds to the data in the third instruction word and the pointer in the second instruction word corresponds to the data specified in the fourth word). If both conditions are true or both are false, the same time slot half is connected that was connected when the condition was read last time, i.e. the same time slot data are connected as in the previous frame. The third and second least significant bits (bits 2 and 1) 1306 in the last two instruction words can be used to define masking and fixed data transmission operations like those in the case of the B64 instruction (cf. Fig. 8).

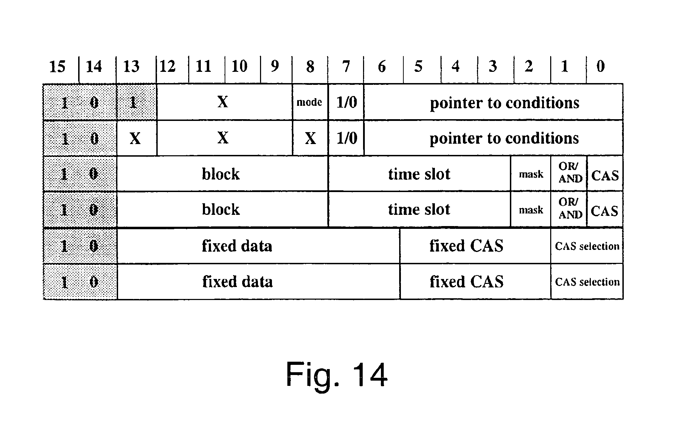

The Y64 instruction according to Fig. 14 is used if CAS is used on the conditional switching channels. The codings of the functions are quite similar to those in the B64 and Y32 instructions. The difference from Y32 is that the connection takes place at the time slot level and not the time slot half level, and that the CAS channel in question is also connected depending on the same conditions.

Thus the switching circuit according to the invention supports quite many and different switching types. This enables high adaptability and, on the other hand, makes it possible to prepare for possible future needs. Because of the 16-bit maximum length of the instruction word it has been necessary to code similar functions in slightly different ways in different instructions. An 18-bit instruction format, for example, would have allowed more individual coding of the instruction types and also better corresponding locations of data fields. However, for various reasons it was not desirable to increase the length of the instruction word. First, a 16-bit circuit is advantageous from the point of view of the microprocessor. Second, this way there is no need for two extra data lines in the external pins of the switching circuit. Furthermore, it is advantageous to realize the connection of fixed data direct in the cross-connecting instructions because this way there is no need for a write connection to the switching circuit's data memory other than the regular writing of data frames from the cross-connecting bus.

## Claims

1. A method for handling instructions in a cross-connecting device comprising a cross-connecting processor (236) arranged to read instructions from a control memory (238) and, controlled by said instructions, to connect data stored in a data memory (237) to transmitter interfaces (235a), wherein the cross-connecting processor (236) reads from each instruction at least a first part (701, 801, 901, 1001, 1301) indicating a type of the instruction and a second part (702, 703, 704, 802, 803, 903a, 903b, 904a, 904b, 1004, 1005) which specifies a source of the data to be connected, **characterised in**:
- the cross-connecting processor reading from each instruction dependent upon the instruction type at least one and at most M instruction words, where M is the number of bits in the biggest possible data unit that can be cross-connected at a time, and
- reserving space in the control memory (238) for each individual instruction which is N times the size of an instruction word, where N is the number of bits in the data source the connection of which is controlled by the instruction in question.

2. The method of claim 1, **characterised in that** it comprises handling three instruction types, of which
- the first instruction type specifies for a data unit a direct cross-connection to a transmitter interface (235a), the location of the data unit being specified (702, 703, 704, 802, 803) in the instruction specifying the direct cross-connection,
- the second instruction type specifies a conditional cross-connection where the data unit to be connected to a transmitter interface (235a) is selected from among at least two alternative data units, the locations of said alternative data units being specified in the instruction specifying the conditional cross-connection, and
- the third instruction type specifies a summing cross-connection in which the data unit to be connected to a transmitter interface (235a) is calculated as a digital sum of at least two other data units, the locations of the data units summed being specified (903a, 903b, 904a, 904b, 1004, 1005) in the instruction specifying the summing cross-connetion.

3. The method of claim 1, **characterised in that** it comprises handling an instruction which specifies that the data unit to be connected to a transmitter interface (235a) is a part (804, 809) of the instruction itself.

4. The method of claim 1, **characterised in that** it comprises handling an instruction which specifies that the data unit to be connected to a transmitter interface (235a) is a result of a logic operation between a specified data unit read from the data memory, and a part (804, 809) of the instruction.

5. A base station for a cellular radio system, which base station comprises a cross-connecting device adapted to provide transmission connections between said base station and other apparatuses in a cellular base station network, said cross-connecting device comprising a cross-connecting processor (236) arranged to read instructions from a control memory (238) and, controlled by said instructions, to connect data stored in a data memory (237) to transmitter interfaces (235a), **characterised in that** the cross-connecting processor (236) is adapted to execute the method of claim 1.

## Patentansprüche

1. Verfahren zur Handhabung von Befehlen in einer Überkreuzverbindungsvorrichtung, die einen Überkreuzverbindungsprozessor (236) umfasst, der dafür konfiguriert ist, Befehle aus einem Steuerspeicher (238) zu lesen und unter der Kontrolle dieser Befehle Daten, die in einem Datenspeicher (237) gespeichert sind, mit Senderschnittstellen (235a) zu verbinden, wobei der Überkreuzverbindungsprozessor (236) aus jedem Befehl wenigstens einen ersten Teil (701, 801, 901, 1001, 1301), der einen Typ des Befehls anzeigt, und einen zweiten Teil (702, 703, 704, 802, 803, 903a, 903b, 904a, 904b, 1004, 1005) ausliest, der eine Quelle der zu verbindenden Daten spezifiziert, **dadurch gekennzeichnet, dass**:
- der Überkreuzverbindungsprozessor je nach dem Befehlstyp aus jedem Befehl mindestens ein Befehlswort und höchstens M Befehlswörter liest, wobei M die Anzahl an Bits in der größtmöglichen Dateneinheit ist, die auf einmal überkreuzverbunden werden kann, und dass
- Platz in dem Steuerspeicher (238) für jeden einzelnen Befehl reserviert wird, der N mal so groß ist wie ein Befehlswort, wobei N die Anzahl an Bits in der Datenquelle ist, deren Verbindung durch den betreffenden Befehl gesteuert wird.

2. Verfahren nach Anspruch 1, **dadurch gekennzeichnet, dass** es die Handhabung dreier Befehlstypen umfasst, wovon:
- der erste Befehlstyp für eine Dateneinheit eine direkte Überkreuzverbindung zu einer Senderschnittstelle (235a) spezifiziert, wobei die Position der Dateneinheit in dem Befehl spezifiziert (702, 703, 704, 802, 803) wird, welcher die direkte Überkreuzverbindung spezifiziert,
- der zweite Befehlstyp eine bedingte Überkreuzverbindung spezifiziert, wobei die Dateneinheit, die mit einer Senderschnittstelle (235a) verbunden werden soll, aus wenigstens zwei alternativen Dateneinheiten ausgewählt wird, wobei die Positionen der alternativen Dateneinheiten in dem Befehl spezifiziert sind, der die bedingte Uberkreuzverbindung spezifiziert, und
- der dritte Befehlstyp eine Summierungs-Überkreuzverbindung spezifiziert, wobei die Dateneinheit, die mit einer Senderschnittstelle (235a) verbunden werden soll, als eine digitale summe aus wenigstens zwei anderen Dateneinheiten berechnet wird, wobei die Positionen der summierten Dateneinheiten in dem Befehl spezifiziert (903a, 903b, 904a, 904b, 1004, 1005) werden, welcher die Summierungs-Überkreuzverbindung spezifiziert.

3. Verfahren nach Anspruch 1, **dadurch gekennzeichnet, dass** es die Handhabung eines Befehls umfasst, der spezifiziert, dass die Dateneinheit, die mit einer Senderschnittstelle (235a) verbunden werden soll, ein Teil (804, 809) des Befehls selbst ist.

4. Verfahren nach Anspruch 1, **dadurch gekennzeichnet, dass** es die Handhabung eines Befehls umfasst, der spezifiziert, dass die Dateneinheit, die mit einer Senderschnittstelle (235a) verbunden werden soll, ein Ergebnis einer Logikoperation zwischen einer spezifizierten Dateneinheit, die aus dem Datenspeicher gelesen wurde, und einem Teil (804, 809) des Befehls ist.

5. Basisstation für ein Mobilfunksystem, wobei diese Basisstation eine Überkreuzverbindungsvorrichtung umfasst, die dafür konfiguriert ist, Sendeverbindungen zwischen der Basisstation und weiteren Vorrichtungen in einem Mobilfunkbasisstationsnetz bereitzustellen, wobei die Überkreuzverbindungsvorrichtung einen Überkreuzverbindungsprozessor (236) umfasst, der dafür konfiguriert ist, Befehle aus einem Steuerspeicher (238) zu lesen und unter der Kontrolle dieser Befehle Daten, die in einem Datenspeicher (237) gespeichert sind, mit Senderschnittstellen (235a) zu verbinden, **dadurch gekennzeichnet, dass** der Überkreuzverbindungsprozessor (236) dafür konfiguriert ist, das Verfahren nach Anspruch 1 auszuführen.

## Revendications

1. Procédé pour gérer les instructions dans un dispositif à interconnexions comprenant un processeur d'interconnexion (236) agencé de manière à lire les instructions dans une mémoire de commande (238) et, commandé par lesdites instructions, à connecter les données stockées dans une mémoire de données (237) aux interfaces de transmetteur (235a), dans lequel le processeur d'interconnexion (236) lit de chaque instruction au moins une première partie (701, 801, 901, 1001, 1301) indiquant un type de l'instruction et une seconde partie (702, 703, 704, 802, 803, 903a, 903b, 904a, 904b, 1004, 1005) qui spécifie une source des données à connecter, **caractérisé en**
- le processeur d'interconnexion lisant dans chaque instruction selon le type d'instruction au moins un et au plus M mots d'instruction, où M est le nombre de bits dans l'unité de données la plus grande possible qui peut être interconnectée à un moment, et
- réservant de l'espace dans la mémoire de commande (238) pour chaque instruction individuelle qui est N fois la taille d'un mot d'instruction, où N est le nombre de bits dans la source de données dont la connexion est commandée par l'instruction en question.

2. Procédé selon la revendication 1, **caractérisé en ce qu'**il comprend de gérer trois types d'instructions, parmi lesquels
- le premier type d'instructions spécifie pour une unité de données une interconnexion directe avec une interface de transmetteur (235a), l'emplacement de l'unité de données étant spécifié (702, 703, 704, 802, 803) dans les instructions spécifiant l'interconnexion directe,
- le deuxième type d'instructions spécifie une interconnexion conditionnelle où l'unité de données devant être connectée à une interface de transmetteur (235a) est sélectionnée parmi au moins deux unités de données alternatives, les emplacements desdites unités de données alternatives étant spécifiés dans l'instruction spécifiant l'interconnexion conditionnelle, et
- le troisième type d'instructions spécifie une interconnexion de sommation dans laquelle l'unité de données devant être connectée à une interface de transmetteur (235a) est calculée en tant que la somme numérique d'au moins deux autres unités de données, les emplacements des unités de données sommées étant spécifiés (903a, 903b, 904a, 904b, 1004, 1005) dans l'instruction spécifiant l'interconnexion de sommation.

3. Procédé selon la revendication 1, **caractérisé en ce qu'**il comprend de gérer une instruction qui spécifie que l'unité de données devant être connectée à une interface de transmetteur (235a) est une partie (804, 809) de l'instruction elle-même.

4. Procédé selon la revendication 1, **caractérisé en ce qu'**il comprend de gérer une instruction qui spécifie que l'unité de données devant être connectée à une interface de transmetteur (235a) est un résultat d'une opération logique entre une unité de données spécifiée lue dans la mémoire de données, et une partie (804, 809) de l'instruction.

5. Station de base pour un système radio cellulaire, laquelle station de base comprend un dispositif d'interconnexion approprié pour fournir des connexions de transmission entre ladite station de base et d'autres appareils dans un réseau cellulaire de stations de base, ledit dispositif d'interconnexion comprenant un processeur d'interconnexion (236) agencé de manière à lire les instructions dans une mémoire de commande (238) et, commandé par lesdites instructions, à connecter les données stockées dans une mémoire de données (237) aux interfaces de transmetteur (235a), **caractérisé en ce que** le processeur d'interconnexion (236) est approprié pour exécuter le procédé selon la revendication 1.
